Europäisches Patentamt

European Patent Office

Office européen des brevets

(11) Publication number: **0 463 462 A1**

## EUROPEAN PATENT APPLICATION

(21) Application number: **91109564.4**

(22) Date of filing: **11.06.91**

(51) Int. Cl.5: **F16D 3/78**

(30) Priority: **29.06.90 JP 69940/90 U**
**14.02.91 JP 5938/91 U**

(43) Date of publication of application:
**02.01.92 Bulletin 92/01**

(84) Designated Contracting States:
**DE FR GB**

(71) Applicant: **KOYO SEIKO CO., LTD.**
**5-8, Minamisemba 3-chome**
**Chuo-ku Osaka 542(JP)**

(72) Inventor: **Atsumi, Toshiyuki**
**237-14, Dongo**
**Yamatotakada-shi, Nara(JP)**
Inventor: **Takeda, Yoshishige**
**4-24, Aioidoori 2-chome**
**Abeno-ku, Osaka(JP)**
Inventor: **Murao, Satoru**
**10-12, Fukada-cho**
**Kadoma-shi, Osaka(JP)**

(74) Representative: **TER MEER - MÜLLER -**
**STEINMEISTER & PARTNER**
**Mauerkircherstrasse 45**
**W-8000 München 80(DE)**

(54) **Flexible coupling.**

(57) A first shaft (1) is coupled to a second shaft (2) with an elastic body (8) interposed therebetween so as to effect torque transmission between the shafts and to absorb vibration. A centering pin (28) provided on a member attached to the first shaft is inserted in a pin socket (30) in a member attached to the second shaft with a clearance formed around the pin in the socket, and a spherical portion provided on the centering pin (28) is in bearing contact with an annular centering seat (32) provided in the pin socket. The centering seat is axially biased by an elastic member (33) into pressing contact with the spherical portion of the centering pin.

FIG.1

The present invention relates to flexible couplings useful, for example, for the propeller shafts of motor vehicles, and more particularly to flexible couplings having a vibration absorbing mechanism and a centering mechanism.

Flexible couplings for use with motor vehicle propeller shafts and the like are provided with a vibration absorbing mechanism for absorbing torque pulsations and axial vibration or impact of the drive system, and with a centering mechanism for regulating the deflection of axes of the drive shaft and the driven shaft relative to each other. Such flexible couplings heretofore known include, for example, the one disclosed in Unexamined Japanese Patent Publication SHO 63-109032. With the disclosed flexible coupling, a drive shaft is coupled to a driven shaft by an elastic body so as to transmit torque to the driven shaft and to absorb axial vibration, and a centering pin provided on a member attached to one of the shafts is inserted in a pin socket in a member attached to the other shaft with a clearance formed around the pin in the socket. The centering pin is inserted through an inner bush provided on its outer periphery with a bulging spherical portion, which is in bearing contact with a recessed spherical portion formed on the inner periphery of an outer bush (centering bush).

The conventional flexible coupling described has the problem that the contact between the spherical bushes of the centering mechanism involves backlashes, giving off a striking noise due to vibration.

Furthermore, the centering mechanism includes the inner and outer two spherical bushes, which give an increased outside diameter to the assembly of centering mechanism and make the mechanism difficult to assemble, hence another problem.

The main object of the present invention is to provide a flexible coupling having a centering mechanism which is free of backlashing.

The present invention provides a flexible coupling which is adapted to couple a first shaft to a second shaft with an elastic body interposed therebetween so as to effect torque transmission between the two shafts and to absorb vibration and wherein a centering pin provided on a member attached to the first shaft is inserted in a pin socket in a member attached to the second shaft with a clearance formed around the pin in the socket, and a spherical portion provided on the centering pin is in bearing contact with an annular centering seat provided in the pin socket, the flexible coupling being characterized in that the centering seat is axially biased by an elastic member into pressing contact with the spherical portion of the centering pin.

The centering seat may be divided circumferentially thereof into a plurality of segments.

In the case where the centering seat comprises the plurality of segments divided circumferentially thereof, it is desirable that a washer be interposed between the centering seat and the elastic member, and that the inner peripheral edge of the centering seat end face in contact with the washer and the inner peripheral edge of the washer end face in contact with the centering seat be both positioned radially inward from the point of contact between the centering pin and the centering seat.

The spherical portion may be formed on the outer periphery of a spherical bush fitted around the centering pin.

The spherical portion may be formed directly on the centering pin.

The centering seat and the elastic member may be accommodated in a tubular case formed with a retainer for preventing each of the centering seat and the elastic member from slipping off, with the case fitted in the pin socket.

With the flexible coupling of the present invention, the centering seat is axially biased by the elastic member into pressing contact with the spherical portion of the centering pin. This arrangement eliminates backlashing of the centering mechanism to preclude occurrence of striking noise.

The backlashing and striking noise can be obviated more effectively especially in the case where the centering seat comprises a plurality of segments divided circumferentially thereof since when biased into pressing contact with the spherical portion of the centering pin in this case, the divided centering seat is spread by a wedging action and brought into tight pressing contact with the spherical portion and the socket-defining inner peripheral surface.

When the washer is provided between the elastic member and the centering seat comprising the divided segments, with the washer inner peripheral edge in contact with the centering seat at a position radially inwardly of the point of contact between the centering pin and the centering seat, the washer prevents the seat segments from tilting to ensure a stabilized centering function.

When the spherical portion is formed directly on the centering pin, the assembly of centering mechanism has a reduced outside diameter.

When the centering seat and the elastic member can be accommodated in the tubular case having retainers therefor and fittable into the pin socket, these components can be readily assembled into the coupling merely by assembling them separately and fitting the case into the socket.

FIG. 1 is a view in vertical section showing a first embodiment of the invention as applied to a flexible coupling for coupling the output shaft of an engine to an interconencting shaft;

FIG. 2 is a view in vertical section showing a portion of FIG. 1, i.e., a centering mechanism, on an enlarged scale;

FIG. 3 is a view in section taken along the line A-A in FIG. 1 and showing an example of centering seat;

FIG. 4 is a view in vertical section showing a second embodiment of the invention, i.e., another flexible coupling;

FIG. 5 is a view in vertical section showing a portion of FIG. 4, i.e., another centering mechanism, on an enlarged scale;

FIG. 6 is a view corresponding to FIG. 5 and showing a modification of the centering mechanism according to the second embodiment;

FIG. 7 is a view in vertical section showing another flexible coupling as a third embodiment of the invention; and

FIG. 8 is a view in vertical section showing a portion of FIG. 7, i.e., another centering mechanism, on an enlarged scale.

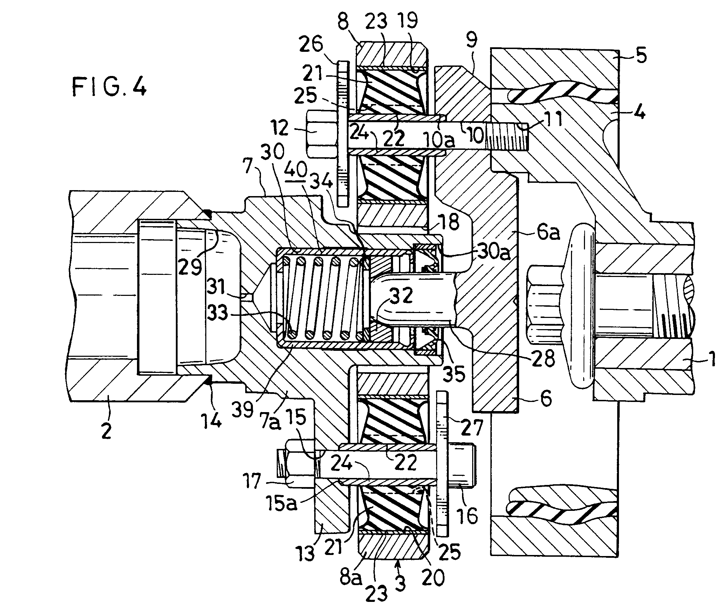

With reference to the drawings, a description will be given of several embodiments of the invention as applied to the flexible coupling for coupling the output shaft of a motor vehicle engine to an interconnecting shaft. Throughout the drawings, like parts are designated by like reference numerals. In the following description, the right-hand side of the drawings (other than FIG. 3) will be referred to as "front," and the left-hand side thereof as "rear."

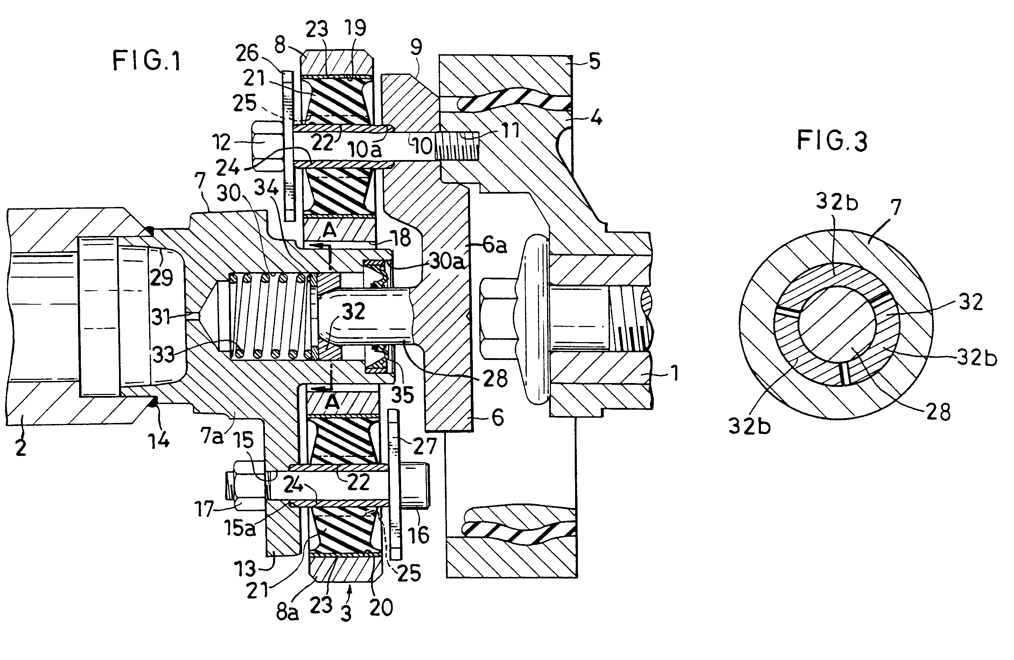

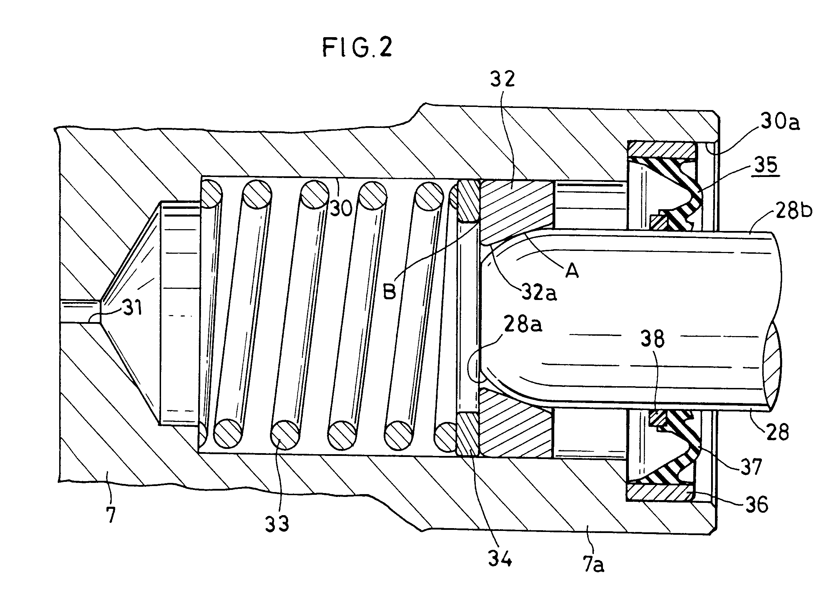

FIGS. 1 and 2 show a first embodiment.

FIG. 1 shows a flexible coupling 3 for coupling the output shaft 1 of an engine to an interconnecting shaft 2. The coupling 3 includes a centering mechanism which is shown in FIG. 2 on an enlarged scale.

A flange 4 is fixed to the rear end of the output shaft 1 and has a pulley 5 attached to the outer periphery of the flange 4. The flange 4 on the output shaft 1 is connected to the front end of the interconnecting shaft 2 by the coupling 3.

The coupling 3 comprises a first flange member 6 fastened to the flange 4 on the output shaft 1, a second flange member 7 secured to the front end of the interconnecting shaft 2, and an intermediate elastic coupling member 8 for elastically interconnecting these flange members 6, 7. The centering mechanism is provided between the two flange members 6, 7.

The first flange member 6 is made of metal or like rigid material and has a disk portion 6a which is substantially coaxial with the output shaft 1 when the flange member 6 is fixed in position. Three arms 9 extending radially outward from the outer periphery of the disk portion 6 are integral therewith and are equdistantly spaced apart circumwith and are equdistantly spaced apart circumferentially thereof. Each of the arms 9 is formed with a bolt hole 10 in parallel to the axis of the disk portion. At the rear end, the bolt hole 10 has an enlarged portion 10a having a slightly larger inside diameter than the other portion thereof. The first flange member 6 is fixed by the flange 4 to the output shaft 1 with three first bolts 12 each inserted through the coupling member 8 and the bolt hole 10 in the arm 9 and screwed into a screw bore 11 in the rear surface of the flange 4 as will be described in detail later.

The second flange member 7 is made of metal or like rigid material and has a cylinder portion 7a which is substantially coaxial with the intermediate shaft 2 when the member 7 is fixed in position. Three arms 13 extend radially outward from the outer periphery of an intermediate part of the cylinder portion 7a integrally therewith and are equidistantly spaced apart circumferentially thereof. The rear end of the second flange member 7 is inserted in the intermediate shaft front end which is hollow by a press fit and secured thereto with a weld 14. Each of the arms 13 is formed with a bolt hole 15 in parallel to the axis of the member 7. At the front end, the bolt hole 15 is formed with an enlarged portion 15a having a slightly larger inside diameter than the other portion thereof. The diameter of pitch circle of the three bolt holes 10 in the first flange member 6 is equal to the diameter of pitch circle of the three bolt holes 15 in the second flange member 7. As will be described below in detail, the second flange member 7 is connected to the coupling member 8 by nuts 17 and second bolts 16 each inserted through the coupling member 8 and the bolt hole 15 of the arm 13.

The coupling member 8 comprises a body 8a in the form of an apertured disk made of metal or like rigid material. The second flange member 7 has a front portion inserted through a center hole 18 in the body 8a with a clearance formed around the front portion in the hole 18. The portion of the body 8a around the center hole 18 is opposed to the rear surfaces of the arms 9 of the first flange member 6 and to the front surfaces of the arms 13 of the second flange member 7.

The coupling member body 8a is formed on a circumference with three apertures (first apertures) 19 corresponding to the bolt holes 10 in the first flange member 6 and three apertures (second apertures) 20 positioned between the first apertures 19 and corresonding to the bolt holes 15 in the second flange member 7. These apertures 19 and 20 are equidistantly spaced apart along the circumference and each have a rubber or like elastic member 21 fitted therein. The elastic member is in the form of a hollow cylinder having a circular center hole 22 and has a length approximately equal to the axial length of the coupling member body 8a. The elastic member 21 fixedly has around its outer periphery an outer sleeve 23 of rigid material having approximately the same length as the member 21 and fitted in each aperture 19 or 20. An inner sleeve (bush) 24 having a larger length than the elastic member 21 is fixedly fitted in the center hole 22 of the member 21 and has front and rear ends projecting beyond the front and rear ends of the elastic member 21, respectively, by a predetermined length.

Although not shown in detail, slits 25 extending axially through the elastic member 21 are formed on opposite sides of the center hole 22 of the member 21, i.e., of the direction of rotation of the coupling member body 8a (circumferential direction of pitch circle of the apertures 19, 20) so as to permit the elastic member 21 to elastically deform greatly in the direction of rotation.

The front end of inner sleeve 24 of the elastic member 21 in each first aperture 19 is fitted in the enlarged portion 10a of the bolt hole 10 in the first flange member 6, and each first bolt 12 is screwed in the screw hole 11 of the flange 4 through the inner sleeve 24 and the bolt hole 10, whereby the first flange member 6 is fixed to the flange 4, and is connected to the coupling member body 8a with the elastic member 21 provided therebetween. The rear end of inner sleeve 24 of the elastic member 21 in each second aperture 20 is fitted in the enlarged portion 15a of the bolt hole 15 in the second flange member 7, and each second bolt 16 inserted through the inner sleeve 24 and the bolt hole 15 and the nut 17 on the bolt 16 connect the second flange member 7 to the coupling member body 8a with the elastic member 21 provided therebetween. Consequently, the elastic members 21 of the coupling member 8 interconnect the first flange member 6 and the second flange member 7. A predetermined clearance is provided between the first flange member 6 and the coupling member body 8a and also between the second flange member 7 and the body 8a.

A stopper 26 (27) in the form of a rectangular plate and serving also as a washer is held between the bolt 12 (16) and the inner sleeve 24. The lengthwise opposite ends of the stopper 26 or 27 extend at least beyond the outer periphery of the elastic member 21 radially thereof and are opposed to the end faces of the outer sleeve 23 and the coupling member body 8a and spaced apart therefrom by a given clearance corresponding to the length of projection of the inner sleeve 24 from the elastic member 21.

The centering mechanism is provided between the first flange member 6 and the second flange member 7.

The disk portion 6a of the first flange member 6 is integrally formed with a centering pin 28 extending rearward from the rear surface of the portion 6a centrally thereof. The centering pin 28 has a bulging spherical portion 28a formed directly on the outer periphery of its rear end, and a solid cylinder portion 28b to the front of this portion and having a uniform outside diameter.

The second flange member 7 is formed concentrically therewith a rear cavity 29 having a relatively large diameter and extending forward from its rear end face, a pin socket 30 extending rearward form its front end face to a position slightly to the front of the rear cavity 29, and an air vent 31 having a small diameter and holding the cavity in communication with the socket. The pin socket 30 has at the front end thereof a seal accommodating portion 30a having a larger inside diameter than the other socket portion. The centering pin 28 is inserted in the front portion of the socket 30 with a clearance formed around the pin in the socket.

An annular centering seat 32 is fitted in the pin socket 30 slidably axially thereof. A coiled compression spring 33 serving as an elastic member for biasing the seat 32 forward is provided between the seat 32 and the rear-end bottom portion of the socket 30. A washer 34 is interposed between the seat 32 and the spring 33. A taper face 32a flaring forward is formed on the inner periphery of the seat 32. The taper face 32a is pressed into contact with the spherical portion 28a of the centering pin 28 by the spring 33.

The centering seat 32 may be in the form of an integral piece, or alternatively, may be circumferentially divided into a plurality of, preferably three, pieces (segments) as seen in FIG. 3. When the centering pin 28 thus formed is pressed into contact with the spherical portion 28a, the divided pieces 32b of the seat 32 are spread by a wedging action and effectively brought into pressing contact with the spherical portion 28a and with the inner surface of the flange member 7 defining the pin socket 30.

An oil seal 35 is installed in the seal accommodating portion 30a of the pin socket 30 for sealing off the socket around the solid cylinder portion 28b of the centering pin 28. The pin socket 30 is filled with grease. The oil seal 35 comprises a metal frame 36 placed in the accommodating portion 30a by a press fit, a rubber lip 37 secured to the inner periphery of the metal frame 36, and a synthetic resin ring 38 secured to the inner peripheral rear portion of the lip 37.

The centering pin 28 is so positioned by the first bolts 12 that the axis thereof is in alignment with the axis of the output shaft 1. When free of deflection, the axis of the output shaft 1 and the axis of the interconnecting shaft 2 are in alignment with each other at all times. If otherwise, these axes intersect each other at the center point of the spherical portion 28a of the centering pin 28. Thus, the centering mechanism performs its contemplated function.

With the flexible coupling described above, the rotation of the output shaft 1 is transmitted to the interconnecting shaft 2 via the flange 4, first flange member 6, first bolts 12, elastic members 21 in the first apertures 19, coupling member body 8a, elastic members 21 in the second apertures 20, second bolts 16 and second flange member 7. The torque pulsation occurring on the output shaft side is absorbed by the elastic deformation of the elastic members 21 in the direction of revolution thereof. Further the axial vibration, impact or the like of the output shaft 1 and the interconnecting shaft 2 relative to each other is absorbed by the axial elastic deformation of the elastic members 21. Furthermore, the centering pin 28 and the centering seat 32 coact with each other for centering, ensuring smooth transmission of rotation free of axial deflection. At this time, the centering seat 32 is always in pressing contact with the spherical portion 28a of the centering pin 28 without backlashing, consequently eliminating striking noise that would occur owing to vibration. Especially when the centering seat 32 is divided, the divided pieces 32b are spread by a wedging action and brought into tight pressing contact with the spherical portion 28a and the socket-defining inner peripheral surface to obviate backlashing more reliably.

During the transmission of rotation described above, usual axial vibration or impact is absorbed by the elastic deformation of the elasic members 21, whereas if an excessive load acts in a direction to move the output shaft 1 and the interconnecting shaft 2 away from each other for one cause or another, the stoppers 26, 27 come into contact with the coupling member body 8a to restrain further deformation of the elastic members 21. If an excessive load acts in a direction to move the output shaft 1 and the interconnecting shaft 2 toward each other, the arms 9, 13 of the two flange members 6, 7 come into contact with the coupling member body 8a, restraining the elastic members 21 from further deformation.

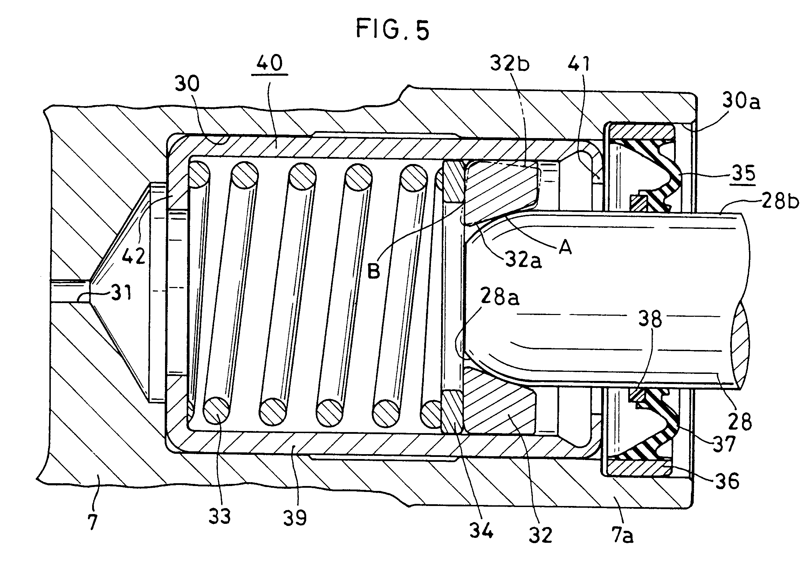

FIGS. 4 and 5 show a second embodiment.

FIG. 4 shows a flexible coupling 3 for connecting the output shaft 1 of an engine to an interconnecting shaft 2. The coupling 3 includes a centering mechanism which is shown in FIG. 5 on an enlarged scale.

According to the second embodiment, the centerring seat 32, washer 34 and spring 33 of the centering mechanism are housed in a case 39, and these components provide a centering unit 40.

As is the case with the first embodiment, the centering seat 32 may be divided into a plurality of segments circumferentially thereof.

The case 39 is in the form of a hollow cylinder which is open at its front and rear ends, and is placed in the pin socket 30 of the second flange member 7 by a press fit. The case 39 is integrally formed at its open front end with a seat retainer 41 in the form of an inward flange and having an inside diameter larger than the outside diameter of the centering pin 28 and smaller than the outside diameter of the centering seat 32, and at its open rear end with a spring retainer 42 having an inside diameter smaller than the inside diameter of the spring 33. The seat 32 and the washer 34 are fitted in the inside front portion of the case 39 and are slidable forward and rearward. The spring 33 is provided between the washer 34 and the rear retainer 42. The case 39 is filled with grease. The centering pin 28 is inserted in the case 39 through the open front end thereof. The taper face 32a of the seat 32 is pressed in contact with the spherical portion 28a of the pin 28. With the exception of the above feature, the second embodiment has the same construction as the first embodiment.

In the case of the second embodiment, the front and rear retainers 41 and 42 of the case 39 respectively prevent the seat 32 and the spring 33 from slipping off. The centering mechanism can be readily incorporated into the coupling merely by separately assembling the centering unit 40 and fitting the case 39 into the pin socket 30. Furthermore, when the centering pin 28 is withdrawn from the case 39, the seat 32 is held inside the case 39 by contact with the front retainer 41 and thereby prevented from slippinf off.

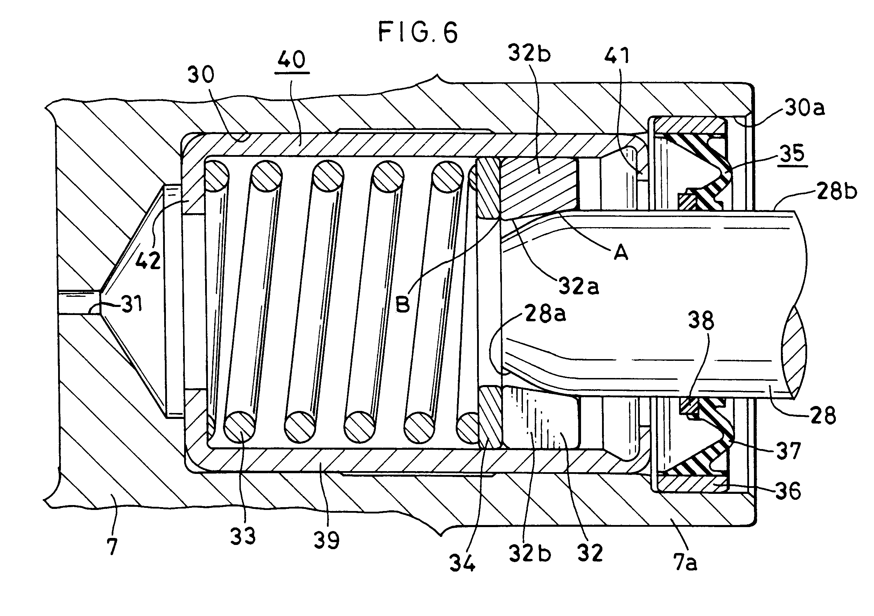

FIG. 6 shows a modification of the centering mechanism included in the second embodiment.

In the case of FIG. 6, the seat 32 comprises a plurality of pieces 32b divided circumferentially thereof. The inside diameter of the seat rear face in contact with the washer 34 is smaller than the outside diameter of the centering pin 28 at the point A of contact between the centering pin 28 and the seat 32 (the outside diameter will hereinafter be referred to merely as the "diameter of the contact point A"), and the inner peripheral edge of the rear face of the seat 32 is positioned radially inwardly of the contact point A. The inside diameter of the washer front face in contact with the seat 32 is also smaller than the diameter of the contact point A, and the innner peripheral edge of the front face of the washer 34 is positioned also radially inwardly of the contact point A. Consequently, the point B of contact between the washer 34 and the seat 32 is positioned radially inwardly of the point A of contact between the centering pin 28 and the seat 32.

In the case of FIG. 5 already described, the inside diameter of front face of the washer 34 in contact with the seat 32 is larger than the diameter of the contact point A, and the point B of contact between the washer 34 and the seat 32 is positioned radially outwardly of the point A of contact between the centering pin 28 and the seat 32. As a result, when the seat 32 comprises the plurality of pieces 32b divided circumferentially thereof with a large clearance provided around the seat 32 in the case 39, the divided piece 32b of the seat 32 is tilted about the point B of contact between the seat 32 and the washer 34 by a load acting on the seat 32 at the point A where the centering pin 28 is in contact with the seat 32, permitting the front portion of the divided piece 32b to incline radially inward out of contact with the inner peripheral surface of the case 39. If the divided piece 32b of the seat 32 inclines in this way, it is difficult to ensure centering with good stability.

In the case of FIG. 6, on the other hand, the point B of contact between the washer 34 and the seat 32 is positioned radially inwardly of the point A of contact between the centering pin 28 and the seat 32, so that even if the centering pin 28 applies a load on the seat 32 at the contact point A, the washer 34 prevents the inclination of the divided piece 32b that would occur as described above. This assures the mechanism of a stabilized centering function at all times.

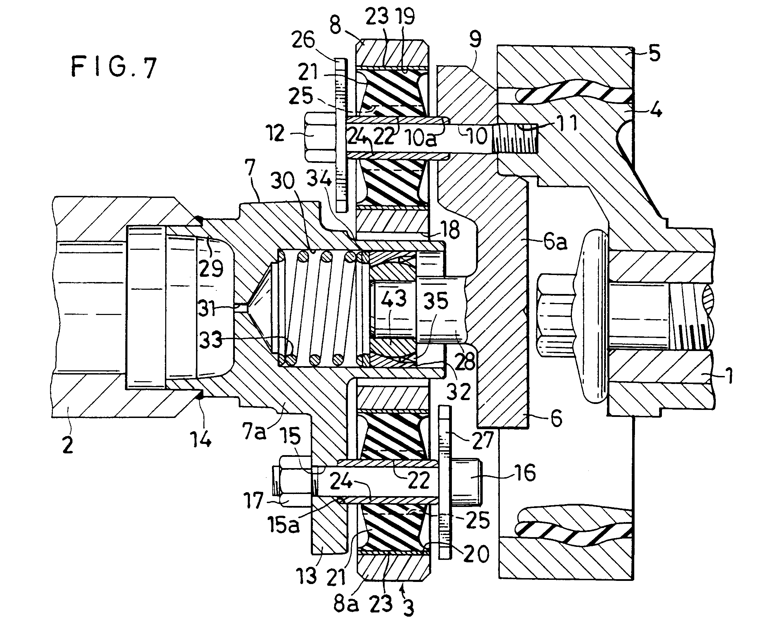

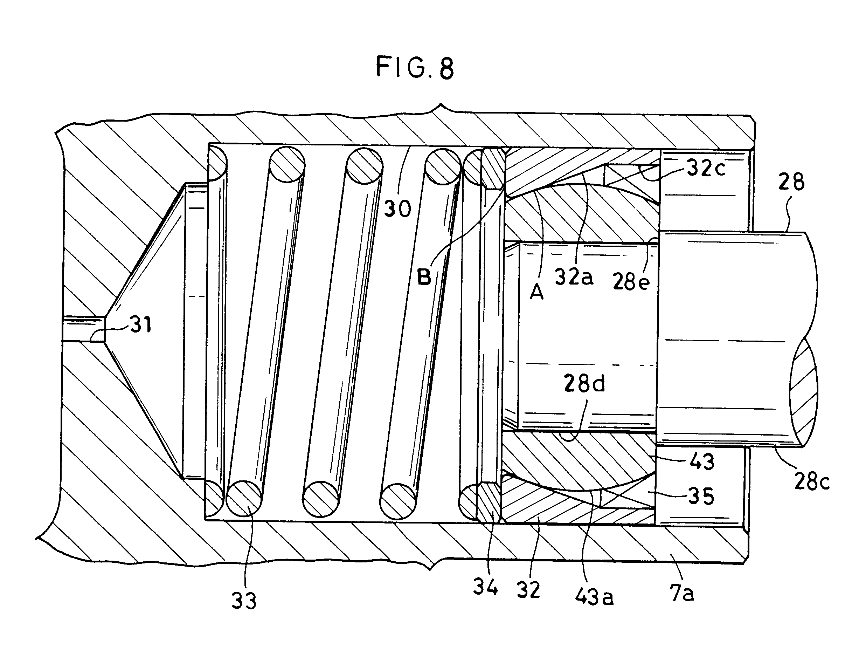

FIGS. 7 and 8 show a third embodiment.

FIG. 7 shows a flexible coupling 3 for coupling the output shaft 1 of an engine to an interconnecting shaft 2. The centering mechanism of the coupling is shown in FIG. 8 on an enlarged scale.

According to the third embodiment, the centering pin 28 comprises a large solid cylinder front portion 28c, and a small solid cylinder rear portion 28d having a slightly smaller outside diameter than the portion 28c. A spherical bush 43 having a bulging spherical portion 43a over the outer periphery thereof is fitted around the small solid cylinder portion 28d and bears on a shoulder 28e between the cylinder portions 28c and 28d. The inner periphery of the centering seat 32 is formed at its rear portion with a taper face 32a flaring forward and at its front portion with a cylindrical face 32c. The taper face 32a of the seat 32 is pressed into contact with the rear part of the spherical portion 43a of the bush 43 by a spring 33. A suitable oil seal 35 is fitted to the cylindrical face of the seat 32 for sealing off the interior space of the seat 32 around the front part of the spherical portion 43a of the bush 43. As in the first embodiment, the seat 32 may be circumferentially divided into a plurality of segments. With the exception of the above feature, the third embodiment is the same as the first embodiment.

In the case where the seat 32 comprises the circumferentially divided pieces 32b in the first and third embodiments, it is desirable that the inside diameter of the seat rear face in contact with the washer 34 and the inside diameter of the washer front face in contact with the seat 32 be both made smaller than the diameter of the contact point A so as to position the point B of contact between the washer 34 and the seat 32 radially inwardly of the point A of contact between the centering pin 28 and the seat 32.

## Claims

1. A flexible coupling which is adapted to couple a first shaft (1) to a second shaft (2) with an elastic body (8) interposed therebetween so as to effect torque transmission between the two shafts and to absorb vibration and wherein a centering pin (28) provided on a member attached to the first shaft is inserted in a pin socket (30) in a member attached to the second shaft with a clearance formed around the pin in the socket, and a spherical portion (28a) provided on the centering pin (28) is in bearing contact with an annular centering seat (32) provided in the pin socket, the flexible coupling being **characterized** in that the centering seat (32) is axially biased by an elastic member (33) into pressing contact with the spherical portion (28a) of the centering pin (28).

2. A flexible coupling as defined in claim 1, **characterized** in that the centering seat (32) is divided circumferentially thereof into a plurality of segments (32b).

3. A flexible coupling as defined in claim 2, **characterized** in that a washer (34) is interposed between the centering seat (32) and the elastic member (33), and the inner peripheral edge of the centering seat end face in contact with the washer and the inner peripheral edge of the washer end face in contact with the centering seat are both positioned radially inward from the point of contact between the centering pin (28) and the centering seat (32).

4. A flexible coupling as defined in claim 1, 2 or 3, **characterized** in that the spherical portion (28a) is formed on the outer periphery of a spherical bush (43) fitted around the centering pin.

5. A flexible coupling as defined in claim 1, 2 or 3, **characterized** in that the spherical portion is formed directly on the centering pin (28).

6. A flexible coupling as defined in claim 5, **characterized** in that the centering seat (32) and the elastic member (33) are accommodated in a tubular case formed with a retainer for preventing each of the centering seat and the elastic member from slipping off, and the case is fitted in the pin socket.

FIG.1

FIG.3

EP 0 463 462 A1

FIG.2

EP 0 463 462 A1

FIG. 4

EP 0 463 462 A1

# FIG. 5

EP 0 463 462 A1

FIG.6

EP 0 463 462 A1

FIG. 7

EP 0 463 462 A1

FIG. 8

28
28c
32c
43
35
7a
28e
32a
A
28d
B
30
34
32
43a
33
31

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-1 035 546 (DAIMLER-BENZ) <br> * The whole document * | 1,4 | F 16 D 3/78 |
| A | | 6 | |
| | — — — | | |
| X | US-A-1 355 516 (STAHL) <br> * The whole document * | 1,2,5 | |
| | — — — — — | | |

TECHNICAL FIELDS SEARCHED (Int. Cl.5)

F 16 D

The present search report has been drawn up for all claims

| Place of search | Date of completion of search | Examiner |
|---|---|---|
| The Hague | 18 September 91 | BEGUIN C.P. |

CATEGORY OF CITED DOCUMENTS

X : particularly relevant if taken alone
Y : particularly relevant if combined with another
    document of the same catagory
A : technological background
O : non-written disclosure
P : intermediate document
T : theory or principle underlying the invention

E : earlier patent document, but published on, or after
    the filing date
D : document cited in the application
L : document cited for other reasons

& : member of the same patent family, corresponding
    document